# EUROPEAN PATENT APPLICATION

(11) **EP 1 850 586 A2**
(43) Date of publication of application: **31.10.2007**
(21) Application number: 07008695.4
(22) Date of filing: 27.04.2007
(51) Int. Cl.: H04N 5/445

(54) **Method and terminal for receiving digital broadcast and managing preferred channels**

(30) Priority: 27.04.2006 KR 20060038311
(71) Applicant: LG Electronics Inc., Yongdungpo-gu Seoul 150-010 (KR)
(72) Inventor: Kim, Jun Hyung, Seoul (KR)
(74) Representative: Katérle, Axel

(57) **Abstract**

A method and terminal for receiving a digital broadcast and managing preferred channels are provided, by which preferred channel information may be set to a random number for registration according to a user's selection. The present invention includes displaying a menu for preferred channel management according to a signal provided via a signal input device, displaying a preferred channel registration menu in a table format including a plurality of cells if a menu for preferred channel registration is selected, and mapping a number indicated by a cell to which a pointer is moved by a user to currently viewed channel information and storing the mapped information in memory.

## Description

This application claims the benefit of the Korean Patent Application No. 10-2006-0038311, filed on April 27, 2006, which is hereby incorporated by reference as if fully set forth herein.

### FIELD OF THE INVENTION

The present invention is directed to a method and terminal for receiving a digiatal broadcast and managing preferred channels. Although the present invention is suitable for a wide scope of applications, it is particularly suitable for selecting and registering a preferred channel number according to a user's selection and displaying preferred television broadcast, radio broadcast, and/or data channel information on a single table with different colors.

### DESCRIPTION OF THE RELATED ART

As used herein, a "channel" refers to an individual service used by a service provider to transmit a broadcast program. Terrestrial digital multimedia broadcasting is explained, for example, among various transmission specifications of digital broadcasting.

A 6 MHz terrestrial channel is divided into three blocks. Several video and audio channels and a data service area are generated from each of the blocks. Specifically, the blocks are video, audio and data channels resulting from the division of 1.2 MHz of an available bandwidth in consideration of a guard band and an error correction code.

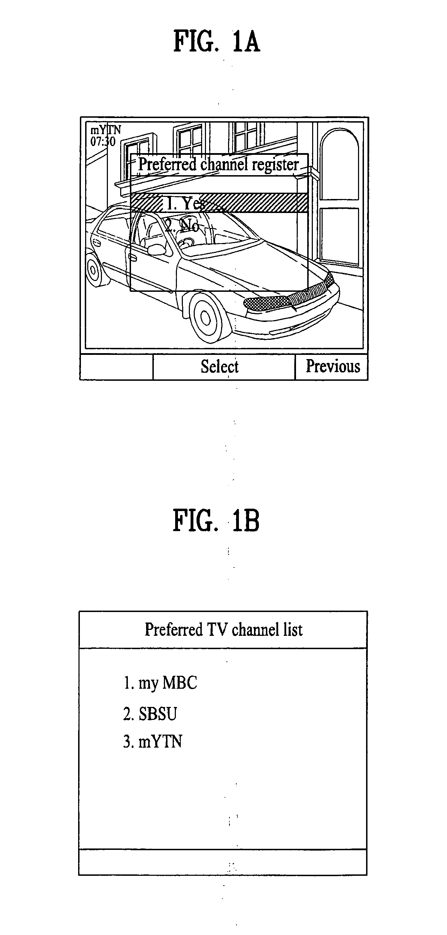

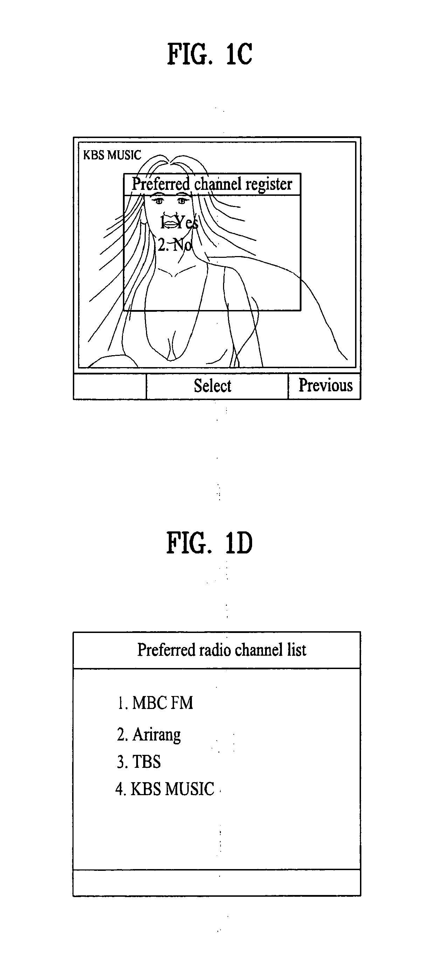

FIGS. 1A to 1D illustrate registration and display formats of a channel list according to the related art. If a currently viewed television broadcast channel is registered as a preferred channel, as illustrated in FIG. 1A, a list is generated, as illustrated in FIG. 1B. If a currently monitored radio broadcast channel is registered as a preferred channel, as illustrated in FIG. 1C, the preferred channel is registered, as illustrated in FIG. 1D.

However, it is inconvenient for a user to confirm a preferred radio broadcast channel while viewing a television broadcast. Information for a currently viewed channel is stored in a sequence regardless of a user's intention and a user must unnecessarily attempt to view or listen to various channels since there is no information related to the availability for viewing or listening of a channel currently registered as a preferred channel.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

One object of the present invention is to provide a method and terminal for receiving a digital broadcast and managing preferred channels, by which preferred channel information may be set to a random number for registration according to a user's selection. Another object of the present invention is to provide a method and terminal for receiving a digital broadcast and managing preferred channels by which information for preferred television broadcast, radio broadcast and/or data broadcast channels may be simultaneously displayed in one table consisting of a plurality of cells. Another object of the present invention is to provide a method and terminal for receiving a digital broadcast and managing preferred channels by which information related to availability of a channel included in a preferred channel list and information related to viewability in re-searching channels may be provided. Another object of the present invention is to provide method and terminal for receiving a digital broadcast and managing preferred channels by which a corresponding channel can be directly entered while a preferred channel list is displayed.

In one aspect of the present invention, a method of managing at least one preferred channel in a terminal receiving a digital broadcast is provided. The method includes displaying a preferred channel management menu, displaying a preferred channel registering menu upon selection of a specific icon on the preferred channel management menu, the preferred channel registering menu including preferred channel information arranged as a plurality of cells in a table format, mapping a number corresponding to a selected specific one of the plurality of cells to currently viewed channel information and storing the mapped information.

It is contemplated that the specific one of the plurality of cells is selected by a pointer moved on the preferred channel registering menu. It is further contemplated that the method further includes displaying the mapped channel information.

It is contemplated that the method further includes displaying a modification menu if channel information is already mapped to the selected specific one of the plurality of cells, the modification menu allowing modification of the mapped information. It is further contemplated that the preferred channel information includes at least one of a television broadcast channel, a radio broadcast channel, and a data channel.

It is contemplated that the method further includes displaying the television broadcast channel, the radio broadcast channel, and the data channel as different colors. It is further contemplated that the preferred channel information includes information corresponding to a current position of the terminal. It is further contemplated that the digital broadcast is received according to at least one specification corresponding to digital multimedia broadcasting (DMB), digital video broadcasting-handheld (DVB-H), and forward link only (FLO).

In another aspect of the present invention, a method of managing at least one preferred channel in a terminal receiving a digital broadcast is provided. The method includes displaying a preferred channel management menu, displaying a preferred channel list menu upon selection of a specific icon on the preferred channel management menu, the preferred channel list menu including preferred channel information arranged as a plurality of cells in a table format, selecting one of the plurality of cells of the preferred channel list menu and performing a selected function related to preferred channel information mapped to a number corresponding to the selected one of the plurality of cells.

It is contemplated that the one of the plurality of cells is selected by a pointer moved on the preferred channel list menu. It is further contemplated that the selected function includes receiving a broadcast of a channel corresponding to the mapped preferred channel information.

It is contemplated that the mapped preferred channel information includes at least one of a television broadcast channel, a radio broadcast channel and a data channel. It is further contemplated that the method further includes displaying the television broadcast channel, the radio broadcast channel, and the data channel as different colors.

It is contemplated that the selected function includes at least partially deleting the mapped preferred channel information. It is further contemplated that the preferred channel information arranged as a plurality of cells includes information corresponding to a current position of the terminal.

It is contemplated that the preferred channel information arranged as a plurality of cells includes an indication of current viewability. It is further contemplated that the indication of current viewability is a color.

It is contemplated that the method further includes displaying information related to a currently unviewable channel that is viewable via a channel re-search. It is further contemplated that the method further includes displaying the mapped preferred channel information.

In another aspect of the present invention, a terminal receiving a digital broadcast and managing at least one preferred channel is provided. The terminal includes a broadcast receiving unit receiving the digital broadcast, an input unit receiving an input from a user, a display unit displaying information, a memory unit storing information and a control unit controlling the display unit to display a preferred channel management menu and one of a preferred channel registering menu and a preferred channel list menu according to an icon selected on the preferred channel management menu, the preferred channel registering menu and preferred channel list menu including preferred channel information arranged as a plurality of cells in a table format, wherein the control unit maps a number corresponding to a selected specific one of the plurality of cells of the preferred channel registering menu to currently viewed channel information and stores the mapped information and wherein the control unit performs a selected function related to preferred channel information mapped to a number corresponding to a selected one of the plurality of cells of the preferred channel list menu.

It is contemplated that the control unit selects the specific one of the plurality of cells of the preferred channel registering menu and the preferred channel list menu according to a pointer moved in response to a signal received via the input unit. It is further contemplated that the input unit includes a keypad.

It is contemplated that the pointer is moved using a direction key. It is further contemplated that the pointer is moved using a numeral key.

It is contemplated that the input unit includes a touch panel. It is further contemplated that the control unit controls the display unit to display the channel information mapped to the number corresponding to the selected specific one of the plurality of cells of the preferred channel registering menu.

It is contemplated that the control unit controls the display unit to display a modification menu if channel information is already mapped to the selected specific one of the plurality of cells of the preferred channel registering menu, the modification menu allowing modification of the mapped information. It is further contemplated that the preferred channel information arranged as a plurality of cells in a table format includes at least one of a television broadcast channel, a radio broadcast channel, and a data channel.

It is contemplated that the control unit controls the display unit to display the television broadcast channel, the radio broadcast channel, and the data channel as different colors. It is further contemplated that the preferred channel information arranged as a plurality of cells in a table format includes information corresponding to a current position of the terminal.

It is contemplated that the broadcast receiving unit receives the digital broadcast according to at least one specification corresponding to digital multimedia broadcasting (DMB), digital video broadcasting-handheld (DVB-H), and forward link only (FLO). It is further contemplated that the selected function includes receiving a broadcast of a channel corresponding to the preferred channel information mapped to the number corresponding to the selected one of the plurality of cells of the preferred channel list menu

It is contemplated that the selected function includes at least partially deleting the preferred channel information mapped to the number corresponding to the selected one of the plurality of cells of the preferred channel list menu. It is further contemplated that the preferred channel information arranged as a plurality of cells in a table format includes an indication of current viewability.

It is contemplated that the indication of current viewability is a color. It is further contemplated that the control unit controls the display unit to display information related to a currently unviewable channel that is viewable via a channel re-search.

Additional features and advantages of the invention will be set forth in the description which follows, and in part will be apparent from the description, or may be learned by practice of the invention. It is to be understood that both the foregoing general description and the following detailed description of the present invention are exemplary and explanatory and are intended to provide further explanation of the invention as claimed.

These and other embodiments will also become readily apparent to those skilled in the art from the following detailed description of the embodiments having reference to the attached figures, the invention not being limited to any particular embodiments disclosed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

FIGS. 1A to 1D illustrate registration and display formats of a channel list according to the related art.

FIG. 2 is a schematic block diagram of a terminal having a digital broadcast receiving function according to the present invention.

FIG. 3 is a flowchart of a process for registering a preferred channel in a terminal having a digital broadcast receiving function according to the present invention.

FIG. 4 illustrates menu paging for preferred channel management in a terminal having a digital broadcast receiving function according to the present invention.

FIGS. 5A to 5D illustrate a process for registering a preferred channel in a terminal having a digital broadcast receiving function according to the present invention.

FIG. 6 illustrates a flowchart of a process for displaying a preferred channel list in a terminal having a digital broadcast receiving function according to the present invention.

FIGS. 7A to 7E illustrate a process for displaying a preferred channel in a terminal having a digital broadcast receiving function according to the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

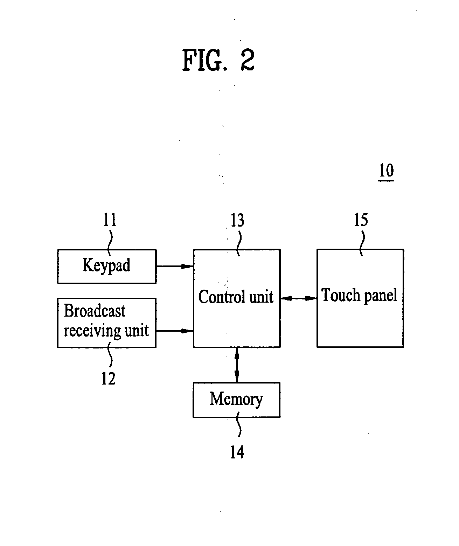

FIG. 2 is a schematic block diagram of a terminal 10 having a digital broadcast receiving function according to the present invention. As illustrated in FIG. 2, the terminal 10 includes a keypad 11 converting a user's input signal to an electrical signal, a broadcast receiving unit 12 receiving digital broadcast signals, a control unit 13 managing preferred channel information using data received via the keypad and the broadcast receiving unit, a memory 14 storing the preferred channel under control of the control unit, and a touch panel 15 having a display function for displaying information recognizable by a user under control of the control unit and an input function for transferring a signal input by a user to the control unit.

Although the illustrated embodiment includes the touch panel 15, the touch panel is exemplary and general displays are also applicable to the present invention. The broadcast signals received via the broadcast receiving unit 12 include signals conforming to one of the transmission specifications for digital multimedia broadcasting (DMB), digital video broadcasting-handheld (DVB-H), and forward link only (FLO).

As used herein, a "preferred channel" refers to a television channel, a radio channel or a data channel. The present invention allows television channel information, television and radio channel information, radio and data channel information, or television and data channel information to be stored in a preferred channel list according to a user's selection. When at least one television channel, at least one radio channel, and at least one data channel is stored, three types of channel information may be represented within one table.

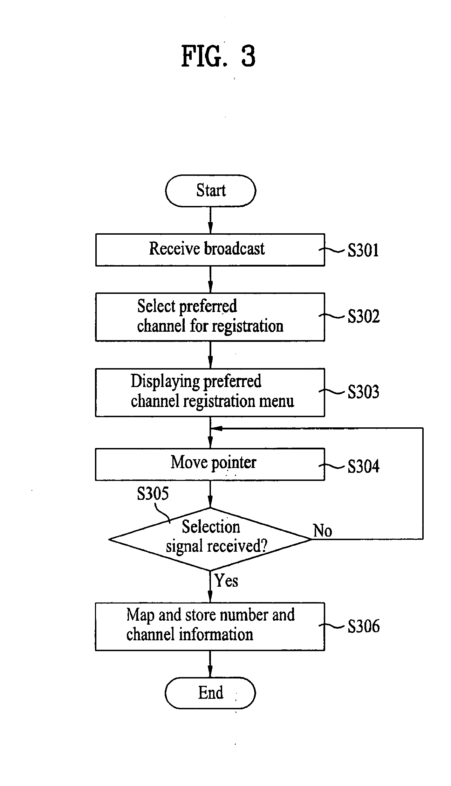

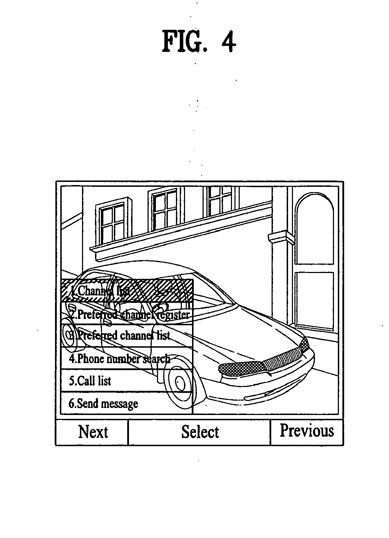

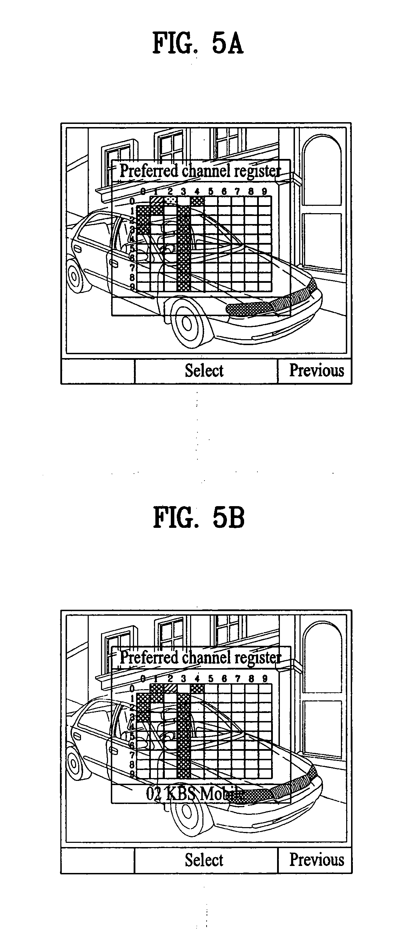

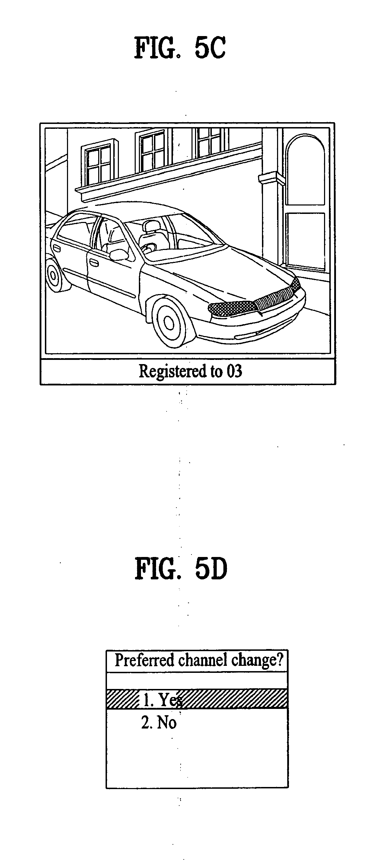

FIG. 3 illustrates a flowchart of a process for registering a preferred channel in a terminal 10 according to the present invention. FIG. 4 illustrates menu paging for preferred channel management in a terminal 10 according to the present invention. FIGS. 5A to 5D illustrate a process for registering a preferred channel using a terminal 10 according to the present invention.

With reference to FIGS. 3 to 5D, a user receives a digital television broadcast, listens to a radio broadcast or uses a service provided via a data channel using a keypad 11 (S301). The user selects a specific received channel for registration as a preferred channel (S302) in order to facilitate searching for the selected channel at a later time and a menu is displayed on a display device, as illustrated in FIG. 4.

A preferred channel registration menu with a plurality of cells in table format is displayed (S303) upon selection of a menu for preferred channel registration, as illustrated in FIG. 5A. A user moves a pointer displayed on the table using a direction or numeral key provided on the keypad 11 (S304). The pointer blinks to allow the user to recognize its position. The terminal 10 may have a touch panel instead of a keypad 11.

Information for a currently set channel, as illustrated in FIG. 5B, is displayed if a preferred channel is registered to a number corresponding to a pointer position. Specifically, a list of preferred channels is represented within one table such that television, radio and data channels differ from each other in color. A channel for which reception is not available at a current position is represented as a different color in order to enable a user to recognize the reception availability if a channel registered as a preferred channel is not included in currently searched channel information.

A number indicated by a cell to which the pointer has been moved is mapped to currently viewed channel information and then stored in the memory 14 when the user inputs a selection signal (S305). Information related to a current location of the terminal can be included in the preferred channel information.

Preferred channel information is classified into areas to be stored in a different table format if necessary. Therefore, an arbitrary number is assigned to the preferred channel information and stored according to a user's selection (S306) .

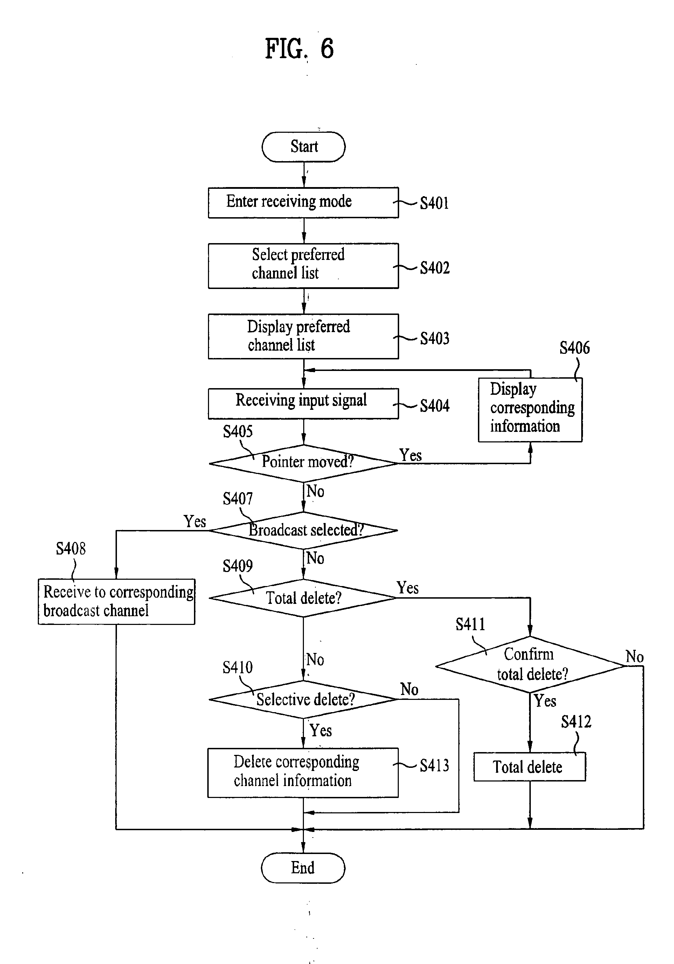

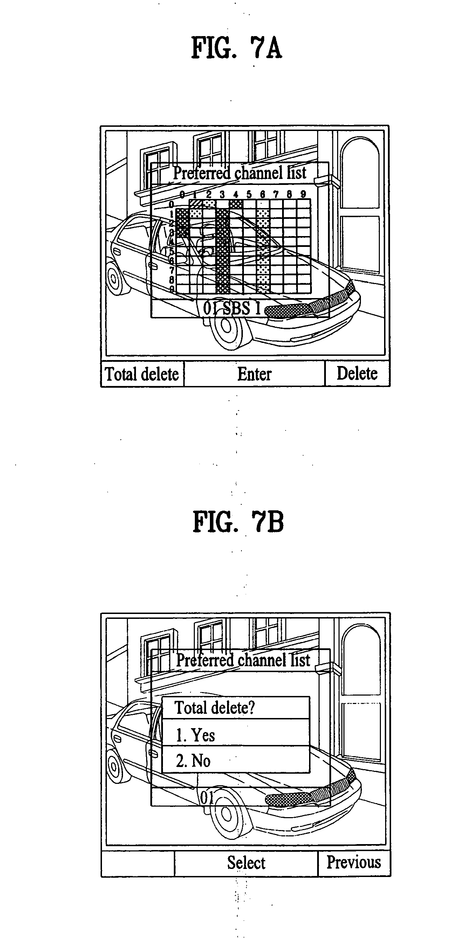

FIG. 6 illustrates a flowchart of a process for displaying a preferred channel list and selecting or altering a preferred channel using a terminal 10 having a digital broadcast receiving function according to the present invention. FIGS. 7A to 7E illustrate a process for displaying a preferred channel using a terminal 10 according to the present invention.

As illustrated in FIGS. 6 to 7E, a television broadcast receiving mode, a radio broadcast receiving mode or a data channel receiving mode is entered according to a user's selection (S401). A preferred channel list display function is selected via a menu item shown in FIG. 4 (S402) by the user.

The control unit 13 reads preferred channel information from the memory 14 and then displays the preferred channel list illustrated in FIG. 7A (S403). Television channels, radio channels and data channels in the preferred channel list are represented within one table with different colors, as previously described. The channels can also be represented as different icons. A channel registered as a preferred channel that is not included in currently searched channel information due to environmental conditions, such as channel reception not available at a current location, is represented as a different color in order to enable a user to recognize reception availability.

A message is output such that a user can recognize viewability for re-search if a channel is indicated as 'reception unavailable' by being excluded from a user's channel search. In this case, a channel that has the same service identification (SID) and uses the same frequency band is indicated as an entry-available mode. The channel is represented as a color that indicates 'entry-unavailable' if a frequency used by a broadcast service provider or a service identification (SID) is modified.

When a signal is received (S404) from a user utilizing a direction or numeral key on a keypad or a touch panel, a pointer is moved (S405). Channel information corresponding to a number to which the pointer has moved is displayed (S406). Preferably, the channel information is displayed on a lower end of a screen if the pointer is located at a preferred channel.

The pointer is moved to cells storing current channel information only instead of moving by a cell unit if a direction key is manipulated to facilitate a shift of the number assigned to the preferred channel and a soft key on the screen provides a function available in a current status only. Specifically, a total delete function is assigned to the soft key only if the pointer is located at a vacant address. Alternately, 'enter' and 'delete' functions are assigned to the soft key if the set channel information exists at the address where the pointer is located.

A channel mapped to a number where the pointer is currently located is received (S408) if the user selects television viewing, radio listening, or a data channel using the keypad or touch panel (S407). The user may then view or listen to the corresponding broadcast.

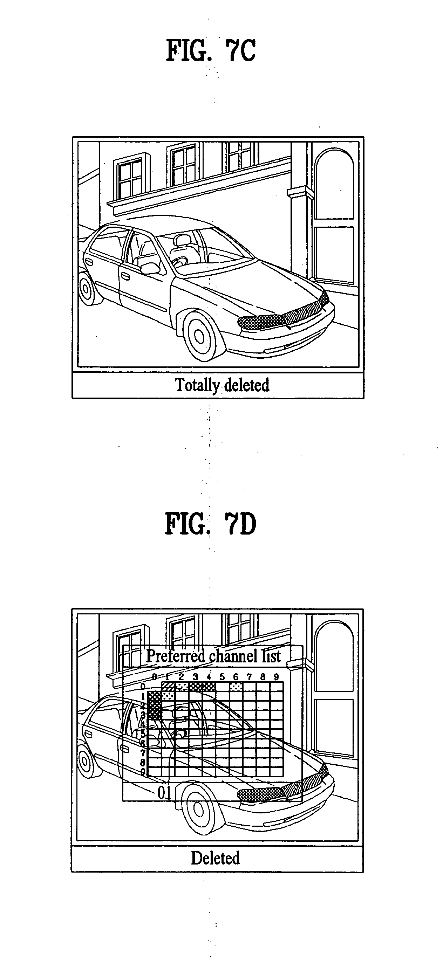

A screen asking a user to confirm intent to delete is displayed, as illustrated in FIG. 7B, if the user selects 'total delete' (S409). The preferred channel information is entirely deleted (S412) and then a current status is displayed if the user confirms the intent to delete (S411), as illustrated in FIG. 7C.

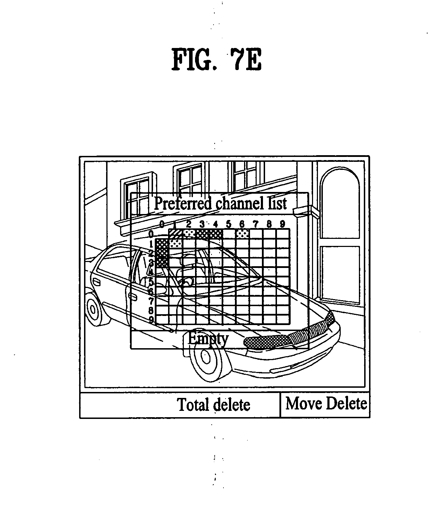

A screen for a selective delete process, as illustrated in FIG. 7D, is displayed (S413) if the user selects to selectively delete the preferred channel information set to a specific number (S410). FIG. 7E illustrates a situation where no channel information set to a corresponding number exists after deletion.

The present invention provides several effects or advantages. First, preferred channel information may be stored in a specific number according to a user's selection. Second, information for preferred television, radio and data channels may be simultaneously viewed via a preferred channel list represented as one table. Third, current viewability and re-search viewability may be confirmed via a preferred channel list.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims. Therefore, all changes and modifications that fall within the metes and bounds of the claims, or equivalence of such metes and bounds are intended to be embraced by the appended claims.

The foregoing embodiments and advantages are merely exemplary and are not to be construed as limiting the present invention. The present teaching can be readily applied to other types of apparatuses.

The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A method of managing at least one preferred channel in a terminal receiving a digital broadcast, the method comprising:
(FIG. 3 method)
displaying a preferred channel management menu;
displaying a preferred channel registering menu upon selection of a specific icon on the preferred channel management menu, the preferred channel registering menu comprising preferred channel information arranged as a plurality of cells in a table format;
mapping a number corresponding to a selected specific one of the plurality of cells to currently viewed channel information; and
storing the mapped information.

2. The method of claim 1, wherein the specific one of the plurality of cells is selected by a pointer moved on the preferred channel registering menu.

3. The method of claim 1, further comprising displaying the mapped channel information.

4. The method of claim 1, further comprising displaying a modification menu if channel information is already mapped to the selected specific one of the plurality of cells, the modification menu allowing modification of the mapped information.

5. The method of claim 1, wherein the preferred channel information comprises at least one of a television broadcast channel, a radio broadcast channel, and a data channel.

6. The method of claim 5, further comprising displaying the television broadcast channel, the radio broadcast channel, and the data channel as different colors.

7. The method of claim 1, wherein the preferred channel information comprises information corresponding to a current position of the terminal.

8. The method of claim 1, wherein the digital broadcast is received according to at least one specification corresponding to digital multimedia broadcasting (DMB), digital video broadcasting-handheld (DVB-H), and forward link only (FLO).

9. A method of managing at least one preferred channel in a terminal receiving a digital broadcast, the method comprising:
(FIG. 6 method)
displaying a preferred channel management menu;
displaying a preferred channel list menu upon selection of a specific icon on the preferred channel management menu, the preferred channel list menu comprising preferred channel information arranged as a plurality of cells in a table format;
selecting one of the plurality of cells of the preferred channel list menu; and
performing a selected function related to preferred channel information mapped to a number corresponding to the selected one of the plurality of cells.

10. The method of claim 9, wherein the one of the plurality of cells is selected by a pointer moved on the preferred channel list menu.

11. The method of claim 9, wherein the selected function comprises receiving a broadcast of a channel corresponding to the mapped preferred channel information.

12. The method of claim 11, wherein the mapped preferred channel information comprises at least one of a television broadcast channel, a radio broadcast channel and a-data channel.

13. The method of claim 12, further comprising displaying the television broadcast channel, the radio broadcast channel, and the data channel as different colors.

14. The method of claim 9, wherein the selected function comprises at least partially deleting the mapped preferred channel information.

15. The method of claim 9, wherein the preferred channel information arranged as a plurality of cells comprises information corresponding to a current position of the terminal.

16. The method of claim 9, wherein the preferred channel information arranged as a plurality of cells comprises an indication of current viewability.

17. The method of claim 16, wherein the indication of current viewability is a color.

18. The method of claim 16, further comprising displaying information related to a currently unviewable channel that is viewable via a channel re-search.

19. The method of claim 9, further comprising displaying the mapped preferred channel information.

20. A terminal receiving a digital broadcast and managing at least one preferred channel, the terminal comprising:
(FIG. 2 / both methods of FIGS. 3 and 6)
a broadcast receiving unit receiving the digital broadcast;
an input unit receiving an input from a user;
a display unit displaying information;
a memory unit storing information; and
a control unit controlling the display unit to display a preferred channel management menu and one of a preferred channel registering menu and a preferred channel list menu according to an icon selected on the preferred channel management menu, the preferred channel registering menu and preferred channel list menu comprising preferred channel information arranged as a plurality of cells in a table format,
wherein the control unit maps a number corresponding to a selected specific one of the plurality of cells of the preferred channel registering menu to currently viewed channel information and stores the mapped information and
wherein the control unit performs a selected function related to preferred channel information mapped to a number corresponding to a selected one of the plurality of cells of the preferred channel list menu.

21. The terminal of claim 20, wherein the control unit selects the specific one of the plurality of cells of the preferred channel registering menu and the preferred channel list menu according to a pointer moved in response to a signal received via the input unit.

22. The terminal of claim 21, wherein the input unit comprises a keypad.

23. The terminal of claim 22, wherein the signal is generated using a direction key.

24. The terminal of claim 22, wherein the signal is generated using a numeral key.

25. The terminal of claim 21, wherein the input unit comprises a touch panel.

26. The terminal of claim 20, wherein the control unit controls the display unit to display the channel information mapped to the number corresponding to the selected specific one of the plurality of cells of the preferred channel registering menu.

27. The terminal of claim 20, wherein the control unit controls the display unit to display a modification menu if channel information is already mapped to the selected specific one of the plurality of cells of the preferred channel registering menu, the modification menu allowing modification of the mapped information.

28. The terminal of claim 20, wherein the preferred channel information arranged as a plurality of cells in a table format comprises at least one of a television broadcast channel, a radio broadcast channel, and a data channel.

29. The terminal of claim 28, wherein the control unit controls the display unit to display the television broadcast channel, the radio broadcast channel, and the data channel as different colors.

30. The terminal of claim 20, wherein the preferred channel information arranged as a plurality of cells in a table format comprises information corresponding to a current position of the terminal.

31. The terminal of claim 20, wherein the broadcast receiving unit receives the digital broadcast according to at least one specification corresponding to digital multimedia broadcasting (DMB), digital video broadcasting-handheld (DVB-H), and forward link only (FLO).

32. The terminal of claim 20, wherein the selected function comprises receiving a broadcast of a channel corresponding to the preferred channel information mapped to the number corresponding to the selected one of the plurality of cells of the preferred channel list menu

33. The terminal of claim 20, wherein the selected function comprises at least partially deleting the preferred channel information mapped to the number corresponding to the selected one of the plurality of cells of the preferred channel list menu.

34. The terminal of claim 20, wherein the preferred channel information arranged as a plurality of cells in a table format comprises an indication of current viewability.

35. The terminal of claim 34, wherein the indication of current viewability is a color.

36. The terminal of claim 35, wherein the control unit controls the display unit to display information related to a currently unviewable channel that is viewable via a channel re-search.
